# EUROPÄISCHE PATENTSCHRIFT

(11) **EP 2 604 130 B1**
(45) Veröffentlichungstag und Bekanntmachung des Hinweises auf die Patenterteilung: **27.04.2016**
(21) Anmeldenummer: 12195458.0
(22) Anmeldetag: 04.12.2012
(51) Int. Cl.: A24C 5/32, A24C 5/35, B65G 11/06

(54) **Fördereinrichtung zum Fördern von stabförmigen Artikeln der Tabak verarbeitenden Industrie**
Conveyor for conveying rod-shaped articles of the tobacco processing industry
Installation de transport pour le transport d'articles en forme de tige de l'industrie de traitement du tabac

(30) Priorität: 13.12.2011 DE 102011088357
(43) Veröffentlichungstag der Anmeldung: 19.06.2013
(73) Patentinhaber: HAUNI Maschinenbau AG, 21033 Hamburg (DE)
(72) Erfinder: Maurer, Alexander, 21035 Hamburg (DE); Kosenko, Dimitri, 21035 Hamburg (DE)
(74) Vertreter: Grebner, Christian Georg Rudolf

(56) Entgegenhaltungen:
- EP-A1- 0 838 164
- WO-A1-2004/082410
- DE-A1- 2 310 291

## Beschreibung

Die Erfindung betrifft eine Fördereinrichtung zum, insbesondere vertikalen, Fördern von stabförmigen Artikeln der Tabak verarbeitenden Industrie, insbesondere Zigaretten oder Filterstäbe, wobei die Fördereinrichtung einen Förderkanal aufweist, wobei der Förderkanal durch zwei einander gegenüber angeordnete und voneinander beabstandete Seitenwände und durch zwei einander gegenüber angeordnete und voneinander beabstandete Kopfendenleitwände ausgebildet ist, wobei die Seitenwände zwischen den paarweise angeordneten Kopfendenleitwänden angeordnet sind, wobei bei Förderung von stabförmigen Artikeln im Förderkanal die Kopfenden der stabförmigen Artikel jeweils einer Kopfendenleitwand zugeordnet sind, und wobei in Förderrichtung der stabförmigen Artikel der Förderkanal schraubenförmig ausgebildet ist.

Ferner betrifft die Erfindung eine Förderanlage der Tabak verarbeitenden Industrie mit einem Fördermittel für die Förderung eines Artikelmassenstroms aus stabförmigen Artikeln der Tabak verarbeitenden Industrie, insbesondere Zigaretten oder Filterstäbe, wobei die stabförmigen Artikel mittels des Fördermittels förderbar sind.

Unter dem Begriff "stabförmige Artikel der Tabak verarbeitenden Industrie" werden neben Filterstäben, Multisegmentfilterstäben oder Multifilterstäben, z.B. auch Zigaretten, Zigarillos oder Zigarren, mit oder ohne Filter verstanden, auf die die Erfindung im gleichen Maß anwendbar ist.

Bei der Herstellung oder Verarbeitung stabförmiger Artikel der Tabak verarbeitenden Industrie werden diese stabförmigen Artikel oder Teile davon über Fördereinrichtungen von einer Herstellmaschine zu einer weiterverarbeitenden Maschine gefördert. Hierbei werden zum Beispiel Filterstäbe über einen Förderkanal und/oder einen Förderschacht im Massenstrom zu einem Vorratsmagazin, beispielsweise einer Filteransetzmaschine, transportiert.

Darüber hinaus ist in DE 25 44 093 A1 eine Fördereinrichtung für Filterzigaretten offenbart. Ferner ist in DE 2 310 291 A1 als Fördereinrichtung für stabförmige Artikel eine schraubenförmig verlaufende Rutsche zum Transport von Zigaretten beschrieben. Hierbei verfügt die Rutsche über einander gegenüberliegende Seitenwände, die die Außenlagen der Zigaretten im Bereich der Zigarettenenden berühren.

Ausgehend von diesem Stand der Technik besteht die Aufgabe der Erfindung darin, die bei einer Förderanlage der Tabak verarbeitenden Industrie in vertikaler Richtung voneinander beabstandeten Anschlusspositionen, die für einen Massenstrom mit stabförmigen Artikeln überbrückt werden sollen, auf einfache und flexible Weise miteinander zu verbinden, insbesondere bei Anschlusspositionen, die in verschiedenen horizontalen Ebenen liegen, wobei bei der vertikalen Überführung der stabförmigen Artikel aus einer oberen Anschlussposition an eine untere Anschlussposition die Orientierung der stabförmigen Artikel geändert werden soll.

Die Aufgabe wird gelöst durch eine Fördereinrichtung zum, insbesondere vertikalen, Fördern, von vorzugsweise in einem Artikelmassenstrom angeordneten, stabförmigen Artikeln der Tabak verarbeitenden Industrie, insbesondere Zigaretten oder Filterstäbe, wobei die Fördereinrichtung einen Förderkanal aufweist, wobei der Förderkanal durch zwei einander gegenüber angeordnete und voneinander beabstandete Seitenwände und durch zwei einander gegenüber angeordnete und voneinander beabstandete Kopfendenleitwände ausgebildet ist, wobei die Seitenwände zwischen den paarweise angeordneten Kopfendenleitwänden angeordnet sind, wobei bei Förderung von stabförmigen Artikeln im Förderkanal die Kopfenden der stabförmigen Artikel jeweils einer Kopfendenleitwand zugeordnet sind, und wobei in Förderrichtung der stabförmigen Artikel der Förderkanal schraubenförmig ausgebildet ist, die dadurch weitergebildet wird, dass der Abstand zwischen den einander gegenüber angeordneten Kopfendenleitwänden in einem Förderabschnitt des Förderkanals mittels einer Kopfendenleitwandabstandseinstelleinrichtung einstellbar ist.

Die Erfindung beruht auf dem Gedanken, dass ein wendelförmiger Förderschacht oder Förderkanal vorgesehen ist, der mittels der Kopfendenleitwandabstandseinstelleinrichtung auf einfache Weise an die (Stab-)Länge der durch den Förderkanal zu fördernden stabförmigen Artikel anpassbar ist, wobei während der Förderung der stabförmigen Artikel durch den helixförmig ausgebildeten, vorzugsweise vertikal ausgerichteten, Förderkanal die Orientierung der stabförmigen Artikel zwischen der Eintrittsseite bzw. Eintrittsöffnung des Förderkanals und der Austrittsseite bzw. der Austrittsöffnung des Förderkanals um einen vorbestimmten Winkel gedreht wird.

Bei dem Förderkanal sind die Seitenwände des Förderkanals derart ausgebildet, dass diese an den Außenlagen des Massenstroms der stabförmigen Artikel zu beiden Seiten des Massenstroms anliegen und in längsaxialer Richtung die Außenlagen berühren sowie die Außenlagen des durch den Förderkanal geförderten Artikelmassenstroms führen. Durch die voneinander beabstandeten Seitenwände wird die Breite des Förderkanals festgelegt, wobei im Rahmen der Erfindung vorgesehen ist, dass durch die bewegbar ausgebildeten Kopfendenleitwände der Abstand zwischen den Kopfendenleitwänden an die Länge der zu fördernden stabförmigen Artikel angepasst wird. Hierdurch ist eine zum vertikalen Fördern vorgesehene Fördereinrichtung der stabförmigen Artikel für die Förderung von unterschiedlichen Längenformaten von stabförmigen Artikeln bereitgestellt und entsprechend an die Stablängen anpassbar.

Unter einem Artikelmassenstrom wird im Rahmen der Erfindung ein Massenstrom von übereinander und in Förderrichtung hintereinander sowie nebeneinander gestapelten stabförmigen Artikeln, wie z.B. Filterstäbe, verstanden, wobei die Längsachsen der stabförmigen Artikel im dichtgestapelten Paket des Massenstroms oder im hexagonalen oder hexagonalartigen Verband während der Förderung parallel zueinander ausgerichtet sind. Vorzugsweise werden dabei die stabförmigen Artikel im Artikelmassenstrom in queraxialer Richtung, d.h. senkrecht zu ihrer Längsausrichtung, gefördert. Typischerweise beträgt die Höhe bzw. Breite eines Artikelmassenstroms, insbesondere quer zur Förderrichtung, ein Mehrfaches des Durchmessers eines einzelnen stabförmigen Artikels.

Die Seitenwände und die Kopfendenleitwände des Förderkanals sind in einer Ausgestaltung aus elektrostatisch ableitfähigem Kunststoff, wie z.B. PC (Polycarbonat), PMMA (Polymethylmethacrylat) mit entsprechenden Oberflächenbehandlungen oder aus kohlefaserverstärktem Verbundwerkstoff wie z.B. PE-UHMW hergestellt. Bei der Verwendung von Kunststoffen ist dabei vorgesehen, dass die Seitenwände als auch die Kopfendenleitwände Antistatika aufweisen, um elektrostatische Aufladungen während der Förderung der stabförmigen Artikel im Förderkanal zu vermeiden. Bei der Verwendung von Kunststoffen ist weiterhin vorgesehen, dass die Kunststoffe gemäß den gesetzlichen Vorschriften z.B. nach FDA und EU-Kunststoffrichtlinie für den Einsatz in der Lebensmittel- und Pharmaindustrie zugelassen sind.

Ferner ist in einer Weiterbildung der Förderkanal stoßkantenfrei, d.h. ohne Stoßkanten ausgebildet, um die mechanische Belastung der fragilen stabförmigen Artikel während des Transports herabzusetzen. Ferner ist im Rahmen der Erfindung vorgesehen, dass der schraubenförmige oder wendelförmige Förderkanal in Förderrichtung der stabförmigen Artikel je nach Anforderung an die baulichen Verhältnisse und an eine Förderanlage rechtsdrehend oder linksdrehend ausgebildet ist.

Darüber hinaus ist im Rahmen der Erfindung vorgesehen, dass durch die Kopfendenleitwandabstandseinstelleinrichtung die bewegbar ausgebildeten Kopfendenleitwandabschnitte im Bereich der Eintrittsöffnung des Förderkanals und/oder im Bereich der Austrittsöffnung des Förderkanals eine Hubbewegung bei Betätigung der Kopfendenleitwandabstandseinstelleinrichtung ausführen. Hierbei werden die Abschnitte der Kopfendenleitwände relativ zueinander verschoben, wobei die einander gegenüber angeordneten Kopfendenleitwandabschnitte an der Eintrittsöffnung und/oder an der Austrittsöffnung des Förderkanals parallel zueinander angeordnet sind, so dass die Längsachsen der zu fördernden stabförmigen Artikel an der Eintrittsöffnung und an der Austrittsöffnung des Förderkanals senkrecht zu den Kopfendenleitwandabschnitten ausgerichtet sind.

Dazu ist in einer bevorzugten Ausführungsform der Fördereinrichtung vorgesehen, dass bei Betätigung der Kopfendenleitwandabstandseinstelleinrichtung die einander gegenüber angeordneten Kopfendenleitwände, vorzugsweise gleichzeitig, bewegbar sind oder bewegt werden. Hierbei ist vorgesehen, dass die gekrümmten Kopfendenleitwandabschnitte im Bereich zwischen der Eintrittsöffnung und der Austrittsöffnung des Förderkanals ebenfalls bei Betätigung der Kopfendenleitwandabstandseinstelleinrichtung eine Hubbewegung relativ zueinander ausführen.

Insbesondere ist bei einer Weiterbildung der Fördereinrichtung vorgesehen, dass bezogen auf die Förderrichtung der stabförmigen Artikel im Förderkanal in einem Förderkanalabschnitt der Abstand der einander gegenüber angeordneten Kopfendenleitwände über die Länge des Förderkanalabschnitts bei Betätigung der Kopfendenleitwandabstandseinstelleinrichtung einstellbar ist oder eingestellt wird.

Dazu ist in einer weiteren Ausgestaltung vorgesehen, dass der Förderkanal eine Eintrittsöffnung und eine Austrittsöffnung in Förderrichtung der stabförmigen Artikel aufweist, wobei an der Eintrittsöffnung und an der Austrittsöffnung des Förderkanals die einander gegenüber angeordneten Endabschnitte der Kopfendenleitwände parallel zueinander angeordnet sind und wobei zwischen der Eintrittsöffnung und der Austrittsöffnung der Förderkanal wendelförmig oder helixförmig ausgebildet ist, so dass bei Förderung der stabförmigen Artikel im Förderkanal die Artikel an der Austrittsöffnung um einen vorbestimmten Wendelwinkel gegenüber der Orientierung der stabförmigen Artikel an der Eintrittsöffnung des Förderkanals in ihrer Position gedreht sind. Dabei werden bei Förderung der stabförmigen Artikel durch einen beispielsweise vertikal angeordneten Förderkanal bei einer Abwärtsförderbewegung der im Artikelmassenstrom angeordneten stabförmigen Artikel die stabförmigen Artikel um eine vertikal verlaufende Achse verdreht, wodurch am Ausgang bzw. an der Austrittsöffnung des Förderkanals die stabförmigen Artikel um den Wendelwinkel des Förderkanals gedreht sind.

Bei der Ausbildung von baugleichen Fördereinrichtungen als Module mit einem vorbestimmten Wendelwinkel beispielsweise von 15° ist es bei Verwendung von mehreren modulartigen Fördereinrichtungen zur Ausbildung eines gesamten Förderkanals möglich, dass die zu fördernden stabförmigen Artikel um ein Vielfaches des Wendelwinkels von 15°, z.B. 30° oder 45° oder 60° oder 90° usw. in ihrer Position bezogen auf die Eintrittsöffnung und die Austrittsöffnung des Förderkanals gedreht sind. Der Gesamtwendelwinkel hängt von der Anzahl der verwendeten Fördermodule ab.

Insbesondere ist es bei einer Ausführungsform der Fördereinrichtung bevorzugt, dass an der Eintrittsöffnung des Förderkanals an den einander gegenüber angeordneten Kopfendenleitwänden jeweils ein linear bewegbarer Aktuator als Stellglied angeordnet ist, wobei die Aktuatoren unter einem vorbestimmten Winkel kleiner 90° (< 90°) an den Kopfendenleitwänden jeweils angeordnet sind, wobei vorzugsweise die lineare Bewegungsrichtung der Aktuatoren parallel, vorzugsweise kollinear, zueinander ausgebildet sind. Im Rahmen der Erfindung wird unter einem Aktuator auch ein mechanisch (betätigbares) Stellglied verstanden.

Außerdem ist hierzu bei einer Weiterbildung der Fördereinrichtung ebenfalls vorgesehen, dass auch an der Austrittsöffnung des Förderkanals an den einander gegenüber angeordneten Kopfendenleitwänden jeweils ein linear bewegbarer Aktuator mit einem linearen Vorschub angeordnet ist, wobei die Aktuatoren unter einem vorbestimmten Winkel kleiner 90° (< 90°) an den Kopfendenleitwänden jeweils angeordnet sind, wobei vorzugsweise die lineare Bewegungsrichtung der Aktuatoren parallel, vorzugsweise kollinear, zueinander ausgebildet sind.

Darüber hinaus zeichnet sich die Fördereinrichtung in einer Ausgestaltung dadurch aus, dass ein an einer Kopfendenleitwand an der Eintrittsöffnung angeordnete linear bewegbarer Aktuator und ein an derselben Kopfendenleitwand an der Austrittsöffnung angeordneter linear bewegbarer Aktuator zur Bewegung der Kopfendenleitwand angeordnet sind, wobei die Bewegungsrichtungen der in Förderrichtung voneinander beabstandeten Aktuatoren, d.h. an der Eintrittsöffnung und an der Austrittsöffnung des Förderkanals, an derselben Kopfendenleitwand parallel, und vorzugsweise in einer zur Eintrittsöffnung oder zur Austrittsöffnung des Förderkanals senkrechten Ebene, ausgebildet sind. Dadurch wird ermöglicht, dass durch Betätigung der Aktuatoren als Stellglieder für die Kopfendenleitwände an der Eintrittsöffnung und an der Austrittsöffnung eine, vorzugsweise parallele, Hubbewegung bzw. Vorschubbewegung der Kopfendenleitwand ausgeführt wird, wodurch die Kopfendenleitwand gleichmäßig bei Betätigung der Aktuatoren bewegt bzw. verschoben wird.

Ferner zeichnet sich eine Ausführungsform der Fördereinrichtung dadurch aus, dass die Kopfendenleitwandabstandseinstelleinrichtung wenigstens einen oder mehrere, vorzugsweise motorisch antreibbare, Antriebe als Aktuatoren als Stellglieder für die Kopfendenleitwände aufweist, wobei insbesondere bei Verwendung von mehreren Antrieben für die Kopfendenleitwände die Antriebe miteinander gekoppelt, insbesondere synchronisierbar, sind.

Außerdem ist im Rahmen der Erfindung eine Steuereinrichtung oder eine Steuereinheit zum Steuern der Antriebe zur automatischen Einstellung des Abstandes der Kopfendenleitwände in Abhängigkeit eines vorgebbaren Artikelformats, insbesondere der Artikellänge, vorgesehen. Diese Steuereinrichtung ist in einer Ausgestaltung Bestandteil der Kopfendenleitwandabstandseinstelleinrichtung, d.h. dass die Kopfendenleitwandabstandseinstelleinrichtung eine entsprechende Steuereinrichtung aufweist.

Vorzugsweise ist ferner bei einer Ausführungsform der Fördereinrichtung vorgesehen, dass die Fördereinrichtung als Modul ausgebildet ist, wobei insbesondere unter Verwendung von mehreren, jeweils als Modul ausgebildeten, insbesondere baugleichen, Fördereinrichtungen ein wendelförmiger Förderkanal für die stabförmigen Artikel ausgebildet ist, wobei der Gesamtwendelwinkel des Förderkanals dem Wendelwinkel der Fördereinrichtungen multipliziert mit der Anzahl der verwendeten, insbesondere baugleichen, Module entspricht.

Überdies zeichnet sich eine Weiterbildung der Fördereinrichtung dadurch aus, dass die Fördereinrichtung als ein Modul mit einem Wendelwinkel von 15° oder mit einem, insbesondere ganzzahligen (> 1), Vielfachen von 15° ausgebildet ist. Hierbei weisen die Module einen vorbestimmten Modulwendelwinkel z.B. von 15° oder einem ganzzahligem Vielfachen davon aus, so dass vorbestimmte Gesamtwendelwinkel bei der vertikalen Förderung der stabförmigen Artikel ausgebildet werden können.

Vorzugsweise sind die Kopfendenleitwände und/oder die Seitenwände der Fördereinrichtung wenigstens teilweise aus, vorzugsweise elektrostatisch ableitfähigem und/oder antistatischem, Kunststoff und/oder aus kohlefaserverstärktem Verbundwerkstoff hergestellt und/oder die Kopfendenleitwände und/oder die Seitenwände sind mit einer, vorzugsweise elektrostatisch, leitenden Oberflächenbeschichtung versehen. Insbesondere sind die Kopfendenleitwände und/oder die Seitenwände elektrostatisch ableitfähig ausgebildet.

Die Handhabung der Fördereinrichtung wird ferner dadurch verbessert, dass wenigstens eine Kopfendenleitwand als schwenkbare Kopfendenleitwand der Fördereinrichtung ausgebildet ist.

Ferner wird die Aufgabe gelöst durch eine Förderanlage der Tabak verarbeitenden Industrie mit einem Fördermittel für die Förderung eines Artikelmassenstroms aus stabförmigen Artikeln der Tabak verarbeitenden Industrie, insbesondere Zigaretten oder Filterstäbe, wobei die stabförmigen Artikel mittels des Fördermittels förderbar sind und mit einer Fördereinrichtung zum, insbesondere vertikalen, Fördern der stabförmigen Artikel wie vorangehend beschrieben. Zur Vermeidung von Wiederholungen wird auf die obigen Ausführungen hierzu ausdrücklich verwiesen. Beispielsweise ist eine Förderanlage der Tabak verarbeitenden Industrie zur Förderung von stabförmigen Artikeln im Massenstrom unter der Bezeichnung RTS (Rod Transfer System) der Hauni Maschinenbau AG, Hamburg, bekannt.

Insbesondere wird bei einer bevorzugten Ausführung der Förderanlage vorgeschlagen, dass eine, vorzugsweise elektronische, Steuereinrichtung zum Steuern der, insbesondere elektromotorischen, Antriebe und/oder der Aktuatoren zur Änderung des Abstandes zwischen den Kopfendenleitwänden vorgesehen ist, wodurch eine einfache und schnelle Abstandsanpassung der Kopfendenleitwände bei einem Wechsel der Artikellänge der zu fördernden stabförmigen Artikel erreicht wird. Hierbei kann der Abstand der Kopfendenleitwände, vorzugsweise automatisch, an die vorgebbare Länge der Artikel angepasst bzw. eingestellt werden.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine Draufsicht auf eine erfindungsgemäße Fördereinrichtung mit einem mit Zigaretten befüllten Förderkanal;
- Fig. 2: schematisch eine Draufsicht auf eine Fördereinrichtung unter Weglassung eines durch den Förderkanal zu fördernden Artikelmassenstroms;
- Fig. 3: schematisch eine perspektivische Ansicht einer erfindungsgemäßen einen Förderkanal aufweisenden Fördereinrichtung und
- Fig. 4: schematisch eine Ansicht eines aus mehreren erfindungsgemäßen Fördereinrichtungen bestehenden Förderkanals.

In den Zeichnungen sind jeweils gleiche oder gleichartige Elemente und/oder Teile mit denselben Bezugsziffern versehen, so dass von einer erneuten Vorstellung jeweils abgesehen wird.

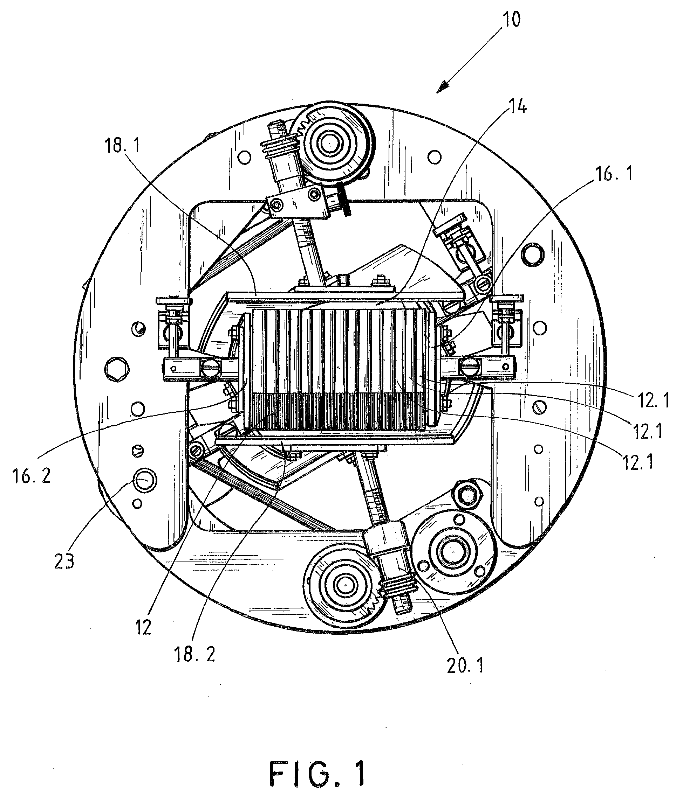

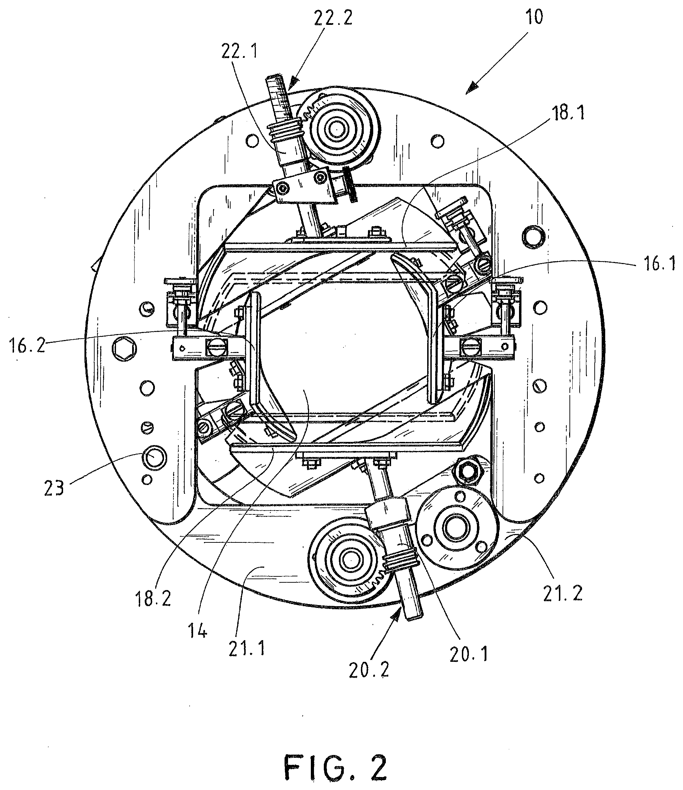

In Fig. 1 und 2 ist schematisch eine Draufsicht auf eine erfindungsgemäße Fördereinrichtung 10 zum vertikalen Fördern von im Paketverband angeordneten stabförmigen Artikeln 12.1 in einem Artikelmassenstrom 12 dargestellt. In Fig. 2 wurde von der Darstellung des Artikelmassenstroms aus Gründen der Übersichtlichkeit abgesehen.

Die Fördereinrichtung 10 weist einen schraubenförmigen oder wendelförmigen Förderkanal 14 auf, wobei der von einer Abgabestelle eines Zuförderers abgegebene Artikelmassenstrom 12 in vertikaler Richtung nach unten durch den Förderkanal 14 hindurchgefördert wird, so dass die Orientierung der Artikel, z.B. Zigaretten, in Bezug auf ihre Orientierung bei Eintritt in den Förderkanal 14 gedreht wird. Der Drehwinkel zwischen der Ausrichtung der stabförmigen Artikel an der Eintrittsseite oder Eintrittsöffnung des Förderkanals 14 und der Orientierungslage der stabförmigen Artikel an der Austrittsseite bzw. Austrittsöffnung des Förderkanals 14 wird auch als Wendelwinkel bezeichnet. Bei den in Fig. 1 und 2 gezeigten Fördereinrichtungen 10 beträgt der Wendelwinkel 30°, d.h. dass die stabförmigen Artikel, z.B. Filterzigaretten, nach Durchtritt durch den Förderkanal 14 um 30° gedreht sind.

Der Förderkanal 14 wird durch zwei voneinander beabstandete Seitenwände 16.1, 16.2 und zwei an den Stirnseiten der Seitenwände 16.1, 16.2 angeordneten Kopfendenleitwände 18.1, 18.2 gebildet. Die Kopfendenleitwände 18.1, 18.2 sind dabei den Kopfenden der stabförmigen Artikel gegenüber angeordnet, wobei die bewegbaren Kopfendenleitwände 18.1, 18.2 in einem einstellbaren Abstand zueinander bewegbar angeordnet sind.

Die Seitenwände 16.1, 16.2 haben dabei die Funktion, dass sie die an den seitlichen Außenlagen des Artikelmassenstroms 12 vorhandenen Zigaretten (als stabförmige Produkte) in seitlicher Richtung führen. Hierbei sind die Seitenwände 16.1, 16.2 zur Ausbildung eines schraubenförmigen oder gewundenen Förderkanals in Förderrichtung des Artikelmassenstroms gekrümmt ausgebildet. Ebenso sind auch die Kopfendenleitwände 18.1, 18.2 in Förderrichtung des Artikelmassenstroms 12 ebenfalls mit einer gekrümmten Fläche ausgebildet, so dass im Zusammenwirken der in Förderrichtung gekrümmten Seitenwände 16.1, 16.2 mit den Kopfendenleitwänden 18.1, 18.2 ein schraubenförmiger Förderkanal 14 in vertikaler Richtung ausgebildet wird.

Die Seitenwände 16.1, 16.2 sind in einem vorbestimmten Abstand an der Eintrittsseite und an der Austrittsseite zueinander beabstandet, wodurch die Breite des Artikelmassenstroms 12 bestimmt wird. Hierbei sind die Seitenwände 16.1, 16.2 über wenigstens eine oder mehrere Verstelleinrichtungen und/oder über wenigstens eine oder mehrere Halteeinrichtungen, beispielsweise an einem Rahmengestell oder einer Trageinrichtung für die Fördereinrichtung 10 dauerhaft unbeweglich fixiert, d.h. dass die Seitenwände 16.1, 16.2 in ihrer Position auch im Betrieb der Fördereinrichtung 10 nicht verändert werden, jedoch beispielsweise im Falle einer Anpassung aufgrund geänderter Anschlussmaschinen in der Massenstromhöhe einfach manuell verstellbar ausgeführt sind.

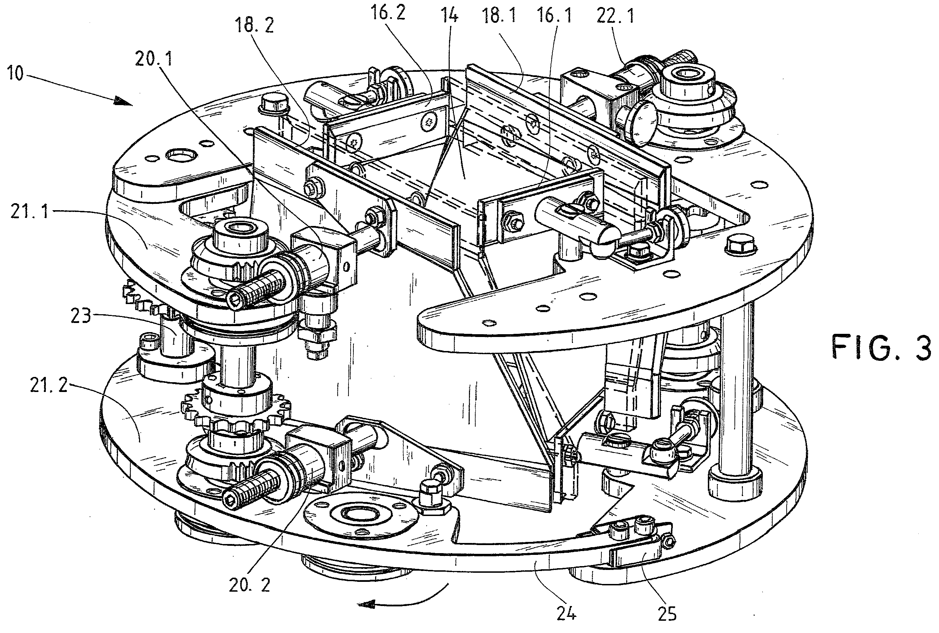

In Fig. 3 ist eine schematische perspektive Ansicht der erfindungsgemäßen Fördereinrichtung dargestellt. Wie aus Fig. 3 ersichtlich, ist an der in horizontaler Richtung bewegbaren Kopfendenleitwand 18.2 (bei vertikaler Förderrichtung des Artikelmassenstroms) im Bereich der Eintrittsseite und der Austrittsseite jeweils ein Antrieb 20.1 und 20.2 mit der Kopfendenleitwand 18.2 verbunden. Die Antriebe 20.1, 20.2 sind als Stellglieder für die Kopfendenleitwand 18.2 ausgebildet, die als lineare Antriebe bei Aktivierung die Kopfendenleitwand 18.2 horizontal in ihrer Position hin und her verschieben. Hierdurch wird eine Hubbewegung der Kopfendenleitwand 18.2 bewirkt, wobei die Kopfendenleitwand 18.2 bei gleichzeitiger, d.h. synchronisierter, Betätigung der Antriebe 20.1, 20.2 in horizontaler Richtung parallel verschoben wird.

Der obere, eingangsseitige Abschnitt der Kopfendenleitwand 18.2 ist gegenüber dem unteren austrittsseitigen Abschnitt der Kopfendenleitwand 18.2, der mit dem Antrieb 20.2 verbunden ist, um den Wendelwinkel (hier im vorliegenden Fall 30°) verdreht. Obwohl der eingangsseitige Abschnitt und der ausgangsseitige Abschnitt der Kopfendenleitwand 18.2 in einem vorbestimmten Winkel zueinander angeordnet sind, sind Bewegungsrichtungen des Antriebs 20.1 am oberen Ende der Kopfendenleitwand 18.2 und des unteren, an der Austrittsseite angeordneten Antriebs 20.2 so angeordnet, dass die Bewegungsrichtungen der Antriebe 20.1, 20.2 in linearer Richtung parallel zueinander ausgerichtet sind, so dass bei synchronisierter Betätigung der Antriebe 20.1, 20.2 ein Parallelhub der Kopfendenleitwand 18.2 ausgeführt wird. Hierbei sind der obere Antrieb 20.1 und der untere Antrieb 20.2 unter einem Winkel kleiner als 90°, im vorliegenden Fall jeweils unter 75°, zu den Abschnitten der Kopfendenleitwand 18.2 an der Eintrittsseite und der Austrittsseite des Förderkanals 14 angeordnet.

In gleicher Weise wie die voranstehend beschriebene Kopfendenleitwand 18.2 verfügt die mit der Kopfendenleitwand 18.2 zusammenwirkende Kopfendenleitwand 18.1 im Bereich der Eintrittsseite des Förderkanals 14 und an der Austrittsseite des Förderkanals 14 über jeweils entsprechende Antriebe 22.1 und 22.2, wobei der unterseitige Antrieb 22.2, der in der Draufsicht in Fig. 2 deckungsgleich mit dem oberen Antrieb 22.1 ist, in Fig. 2 nicht sichtbar ist.

Entsprechend ist auch in der Draufsicht gemäß Fig. 2 der untere Antrieb 20.2 für die Kopfendenleitwand 18.2 deckungsgleich mit dem oberen Antrieb 20.1.

Durch die gleichzeitige Betätigung der Antriebe 22.1 und 22.2 wird die Kopfendenleitwand 18.1 ebenfalls in horizontaler Richtung verschoben.

Darüber hinaus ist in einer Ausgestaltung der Erfindung vorgesehen, dass bei einer Anpassung der Abstände zwischen den Kopfendenleitwänden 18.1 und 18.2 die Antriebe 20.1, 20.2 sowie 22.1 und 22.2 synchronisiert angetrieben werden.

Die Antriebe 20.1 und 20.2 für die Kopfendenleitwand 18.2 sind jeweils an verschwenkbaren, sichelförmigen Haltearmen 21.1 und 22.2 angeordnet, wobei die Haltearme 21.1, 21.2 um eine vertikale Schwenkachse 23 gelagert sind. Hierdurch ist die Kopfendenleitwand 18.2 verschwenkbar ausgebildet. Beim Öffnen des Förderkanals 14 wird die Kopfendenleitwand 18.2 weggeschwenkt, so dass der Förderkanal an einer Kopfendenleitwandseite zugänglich ist.

Der untere Haltearm 21.2 ist sichelförmig ausgebildet, wobei am von der Schwenkachse 23 abgewandten Ende ein nasenförmiger Vorsprung 24 ausgebildet ist, der im geschlossenen Zustand des Förderkanals 14 im Eingriff mit einem Anschlag 25 für den Haltearm 21.2 gebracht ist. Hierbei kann in einer Ausgestaltung der Anschlag 25 mit einem oder mehreren Magneten ausgebildet sein, wodurch z.B. der aus Eisen oder Stahl gefertigte Haltearm 21.2 von den Magneten des Anschlags 25 in einer Schließposition gehalten wird.

Außerdem ist es im Rahmen der Erfindung vorgesehen, dass für die Antriebe 20.1, 20.2 sowie 22.1, 22.2 eine Drehwinkelerfassungseinrichtung vorgesehen ist, wobei insbesondere in einer (hier nicht dargestellten) Steuereinrichtung für die Antriebe 20.1, 20.2 sowie 22.1, 22.2 der Drehwinkel ermittelt wird. Hierbei wird z.B. der Verstellweg der Kopfendenleitwände 18.1, 18.2 aus dem Produkt des Steigungswinkels der Gewindestangen der Antriebe 20.1, 20.2 sowie 22.1, 22.2, die mit den Kopfendenleitwänden 18.1, 18.2 verbunden sind, und der Anzahl der Umdrehungen der Gewindestangen ermittelt.

Weiterhin ist in einer hier nicht dargestellten Weiterbildung der Fördereinrichtung 10 eine Endlagenüberwachungseinrichtung für die Erfassung der Endpositionen der Kopfendenleitwände 18.1, 18.2 und/oder der Antriebe 20.1, 20.2 sowie 22.1, 22.2 vorgesehen. Ferner ist in einer Ausgestaltung eine Blockierschutzeinrichtung für die Antriebe 20.1, 20.2, 22.1 und 22.2 vorgesehen, so dass bei Betätigung der Antriebe 20.1, 20.2, 22.1 und 22.2 ein Blockieren der Antriebe z.B. nach einer vorbestimmten Zeitdauer erfasst wird und die, vorzugsweise blockierten oder blockierenden, Antriebe deaktiviert werden.

In den Fig. 2 und 3 sind gestrichelt die eingestellten Positionen der Kopfendenleitwände 18.1, 18.2 bei kürzeren Längen der stabförmigen Artikel eingezeichnet. Durch die synchronisierte Betätigung der Antriebe 20.1, 20.2 sowie 22.1, 22.2 ist die ausgeführte Hublänge der Kopfendenleitwände 18.1, 18.2 im Eintrittsbereich und im Austrittsbereich konstant. Als Antriebe oder Hubantriebe für die Kopfendenleitwände 18.1, 18.2 ist es im Rahmen der Erfindung möglich, entsprechende Riemen, Ketten oder elektromotorische oder pneumatische Einzelantriebe oder elektromotorische oder pneumatische Linearantriebe vorzusehen. Darüber hinaus ist in einer Ausgestaltung der Erfindung vorgesehen, dass die Antriebe für die Kopfendenleitwände 18.1, 18.2 auch per Hand antreibbar sind.

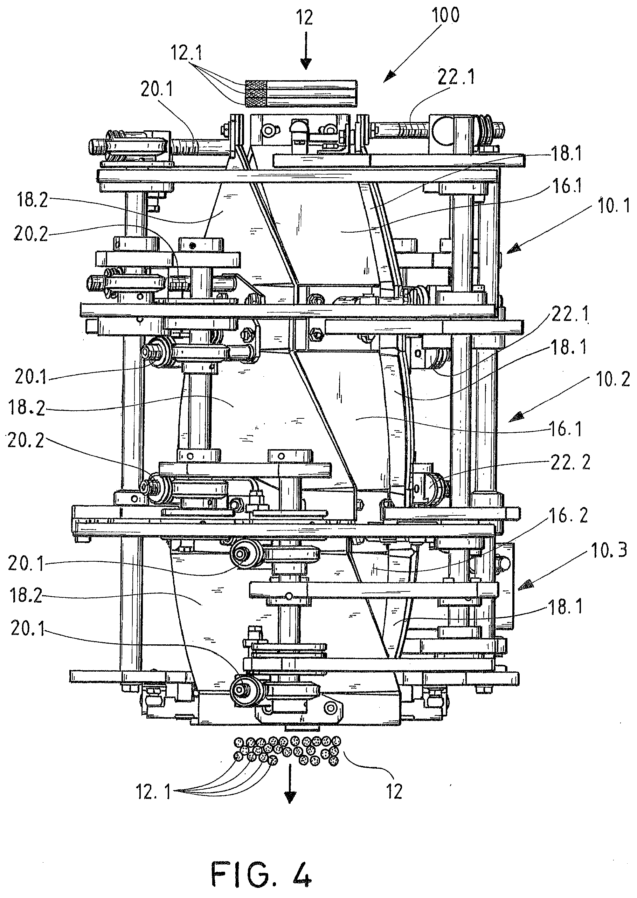

In Fig. 4 ist schematisch eine weitere Ausführungsform einer vertikalen Fördereinrichtung 100 in einer Seitenansicht dargestellt, wobei die vertikale Fördereinrichtung 100 aus drei Fördereinrichtungen 10.1, 10.2, 10.3 gebildet ist, die als Module miteinander verbunden sind.

Hierbei sind die Module 10.1, 10.2, 10.3 dem Prinzip nach wie die in Fig. 1 bis 3 beschriebene Fördereinrichtung 10 aufgebaut. Hierbei weist jedes Fördermodul 10.1, 10.2, 10.3 jeweils einen Wendelwinkel von 30° auf, so dass nach Durchtritt des Artikelmassenstroms 12 an der Unterseite der Vertikalfördereinrichtung 100 die stabförmigen Artikel des Artikelmassenstroms 12 um 90° gegenüber ihrer Orientierung an der Eintrittsseite des Förderkanals der Vertikalfördereinrichtung 100 gedreht sind. Bei der aus mehreren Fördermodulen 10.1, 10.2, 10.3 ausgebildeten vertikalen Fördereinrichtung 100 ist beim Übergang von einem Fördermodul zum nachfolgenden Fördermodul vorgesehen, dass die Austrittsseite des oberen Fördermoduls deckungsgleich mit den Kopfendenleitwänden an der Eintrittsseite des nachfolgenden Fördermoduls ist.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Fördereinrichtung
- 10.1, 10.2, 10.3: Fördermodul
- 12: Artikelmassenstrom
- 12.1: Artikel
- 14: Förderkanal
- 16.1, 16.2: Seitenwand
- 18.1, 18.2: Kopfendenleitwand
- 20.1, 20.2: Antrieb
- 21.1, 21.2: Haltearm
- 22.1, 22.2: Antrieb
- 23: Schwenkachse
- 24: Nase
- 25: Anschlag
- 100: Fördereinrichtung

## Patentansprüche

1. Fördereinrichtung (10) zum, insbesondere vertikalen, Fördern von stabförmigen Artikeln (12) der Tabak verarbeitenden Industrie, insbesondere Zigaretten oder Filterstäbe, wobei die Fördereinrichtung (10) einen Förderkanal (14) aufweist, wobei der Förderkanal (14) durch zwei einander gegenüber angeordnete und voneinander beabstandete Seitenwände (16.1, 16.2) und durch zwei einander gegenüber angeordnete und voneinander beabstandete Kopfendenleitwände (18.1, 18.2) ausgebildet ist, wobei die Seitenwände (16.1, 16.2) zwischen den paarweise angeordneten Kopfendenleitwänden (18.1, 18.2) angeordnet sind, wobei bei Förderung von stabförmigen Artikeln (12) im Förderkanal (14) die Kopfenden der stabförmigen Artikel (12) jeweils einer Kopfendenleitwand (18.1, 18.2) zugeordnet sind, und wobei in Förderrichtung der stabförmigen Artikel (12) der Förderkanal (14) schraubenförmig ausgebildet ist, **dadurch gekennzeichnet, dass** der Abstand zwischen den einander gegenüber angeordneten Kopfendenleitwänden (18.1, 18.2) in einem Förderabschnitt des Förderkanals (14) mittels einer Kopfendenleitwandabstandseinstelleinrichtung (20.1, 20.2; 22.1, 22.2) einstellbar ist.

2. Fördereinrichtung (10) nach Anspruch 1, **dadurch gekennzeichnet, dass** bei Betätigung der Kopfendenleitwandabstandseinstelleinrichtung (20.1, 20.2; 22.1, 22.2) die einander gegenüber angeordneten Kopfendenleitwände (18.1, 18.2), vorzugsweise gleichzeitig, bewegbar sind oder bewegt werden.

3. Fördereinrichtung (10) nach Anspruch 1 oder 2, **dadurch gekennzeichnet, dass** bezogen auf die Förderrichtung der stabförmigen Artikel (12) im Förderkanal (14) in einem Förderkanalabschnitt der Abstand der einander gegenüber angeordneten Kopfendenleitwände (18.1, 18.2) über die Länge des Förderkanalabschnitts bei Betätigung der Kopfendenleitwandabstandseinstelleinrichtung (20.1, 20.2; 22.1, 22.2) einstellbar ist oder eingestellt wird.

4. Fördereinrichtung (10) nach einem der Ansprüche 1 bis 3, **dadurch gekennzeichnet, dass** der Förderkanal (14) eine Eintrittsöffnung und eine Austrittsöffnung in Förderrichtung der stabförmigen Artikel (12) aufweist, wobei an der Eintrittsöffnung und an der Austrittsöffnung des Förderkanals (14) die einander gegenüber angeordneten Endabschnitte der Kopfendenleitwände (18.1, 18.2) parallel zueinander angeordnet sind und wobei zwischen der Eintrittsöffnung und der Austrittsöffnung der Förderkanal (14) wendelförmig ausgebildet ist, so dass bei Förderung der stabförmigen Artikel (12) im Förderkanal (14) die Artikel (12) an der Austrittsöffnung um einen vorbestimmten Wendelwinkel gegenüber der Orientierung der stabförmigen Artikel an der Eintrittsöffnung des Förderkanals (14) in ihrer Position gedreht sind.

5. Fördereinrichtung (10) nach einem der Ansprüche 1 bis 4, **dadurch gekennzeichnet, dass** an der Eintrittsöffnung des Förderkanals (14) an den einander gegenüber angeordneten Kopfendenleitwänden (18.1, 18.2) jeweils ein linear bewegbarer Aktuator angeordnet ist, wobei die Aktuatoren unter einem vorbestimmten Winkel kleiner 90° (< 90°) an den Kopfendenleitwänden (18.1, 18.2) jeweils angeordnet sind, wobei vorzugsweise die lineare Bewegungsrichtung der Aktuatoren parallel, vorzugsweise kollinear, zueinander ausgebildet sind.

6. Fördereinrichtung (10) nach einem der Ansprüche 1 bis 5, **dadurch gekennzeichnet, dass** an der Austrittsöffnung des Förderkanals (14) an den einander gegenüber angeordneten Kopfendenleitwänden (18.1, 18.2) jeweils ein linear bewegbarer Aktuator angeordnet ist, wobei die Aktuatoren unter einem vorbestimmten Winkel kleiner 90° (< 90°) an den Kopfendenleitwänden (18.1, 18.2) jeweils angeordnet sind, wobei vorzugsweise die lineare Bewegungsrichtung der Aktuatoren parallel, vorzugsweise kollinear, zueinander ausgebildet sind.

7. Fördereinrichtung (10) nach einem der Ansprüche 1 bis 6, **dadurch gekennzeichnet, dass** ein an einer Kopfendenleitwand (18.1, 18.2) an der Eintrittsöffnung angeordnete linear bewegbarer Aktuator und ein an derselben Kopfendenleitwand (18.1, 18.2) an der Austrittsöffnung angeordneter linear bewegbarer Aktuator zur Bewegung der Kopfendenleitwand (18.1, 18.2) angeordnet sind, wobei die Bewegungsrichtungen der in Förderrichtung voneinander beabstandeten Aktuatoren an derselben Kopfendenleitwand (18.1, 18.2) parallel, und vorzugsweise in einer zur Eintrittsöffnung oder zur Austrittsöffnung des Förderkanals (14) senkrechten Ebene, ausgebildet sind.

8. Fördereinrichtung (10) nach einem der Ansprüche 1 bis 7, **dadurch gekennzeichnet, dass** die Kopfendenleitwandabstandseinstelleinrichtung (20.1, 20.2; 22.1, 22.2) wenigstens einen oder mehrere, vorzugsweise motorisch antreibbare, Antriebe als Aktuatoren für die Kopfendenleitwände (18.1, 18.2) aufweist, wobei insbesondere bei Verwendung von mehreren Antrieben für die Kopfendenleitwände (18.1, 18.2) die Antriebe miteinander gekoppelt, insbesondere synchronisierbar, sind.

9. Fördereinrichtung (10) nach einem der Ansprüche 1 bis 8, **dadurch gekennzeichnet, dass** die Fördereinrichtung (10) als Modul (10.1, 10.2, 10.3) ausgebildet ist, wobei insbesondere unter Verwendung von mehreren, jeweils als Modul (10.1, 10.2, 10.3) ausgebildeten, insbesondere baugleichen, Fördereinrichtungen (10) ein wendelförmiger Förderkanal (14) für die stabförmigen Artikel ausgebildet ist, wobei der Gesamtwendelwinkel des Förderkanals (14) dem Wendelwinkel der Fördereinrichtungen (10) multipliziert mit der Anzahl der verwendeten, insbesondere baugleichen, Module (10.1, 10.2, 10.3) entspricht.

10. Fördereinrichtung (10) nach einem der Ansprüche 1 bis 9, **dadurch gekennzeichnet, dass** die Fördereinrichtung (10) als ein Modul (10.1, 10.2, 10.3) mit einem Wendelwinkel von 15° oder mit einem, insbesondere ganzzahligen (> 1), Vielfachen von 15° ausgebildet ist.

11. Fördereinrichtung (10) nach einem der Ansprüche 1 bis 10, **dadurch gekennzeichnet, dass** die Kopfendenleitwände (18.1, 18.2) und/oder die Seitenwände (16.1, 16.2) der Fördereinrichtung (10) wenigstens teilweise aus, vorzugsweise elektrostatisch ableitfähigem und/oder antistatischem, Kunststoff und/oder aus kohlefaserverstärktem Verbundwerkstoff hergestellt sind und/oder dass die Kopfendenleitwände (18.1, 18.2) und/oder die Seitenwände (16.1, 16.2) mit einer leitenden Oberflächenbeschichtung versehen sind.

12. Fördereinrichtung (10) nach einem der Ansprüche 1 bis 11, **dadurch gekennzeichnet, dass** wenigstens eine Kopfendenleitwand als schwenkbare Kopfendenleitwand der Fördereinrichtung (10) ausgebildet ist.

13. Förderanlage der Tabak verarbeitenden Industrie mit einem Fördermittel für die Förderung eines Artikelmassenstroms aus stabförmigen Artikeln (12) der Tabak verarbeitenden Industrie, insbesondere Zigaretten oder Filterstäbe, wobei die stabförmigen Artikel mittels des Fördermittels förderbar sind und mit einer Fördereinrichtung (10) zum, insbesondere vertikalen, Fördern der stabförmigen Artikel nach einem der Ansprüche 1 bis 12.

14. Förderanlage nach Anspruch 13, **dadurch gekennzeichnet, dass** eine, vorzugsweise elektronische, Steuereinrichtung zum Steuern der, insbesondere elektromotorischen, Antriebe und/oder der Aktuatoren zur Änderung des Abstandes zwischen den Kopfendenleitwänden vorgesehen ist.

## Claims

1. Conveying device (10) for the conveyance, in particular for the vertical conveyance, of rod-shaped articles (12) of the tobacco-processing industry, in particular cigarettes or filter rods, in which the conveying device (10) comprises a conveyance channel (14), in which the conveyance channel (14) is formed by two side walls (16.1, 16.2) that are opposite-facing and separate from each other, and by two head-end guide walls (18.1, 18.2) that are opposite-facing and separate from each other, in which the side walls (16.1, 16.2) are arranged between the head-end guide walls (18.1, 18.2) which are arranged in pairs, in which the head ends of the rod-shaped articles (12) are each assigned to a head-end guide wall (18.1, 18.2) during the conveyance of rod-shaped articles (12) in the conveyance channel (14), and in which the conveyance channel (14) in the direction of conveyance of the rod-shaped articles (12) is designed in the form of a screw, **characterized in that** the distance between the opposite-facing head-end guide walls (18.1, 18.2) is adjustable in a conveyance section of the conveyance channel (14) by means of a head-end guide-wall distance adjustor (20.1, 20.2; 22.1, 22.2).

2. The conveying device (10) according to claim 1, **characterized in that** the opposite-facing head-end guide walls (18.1, 18.2) are preferably simultaneously movable or moved by operation of the head-end guide-wall distance adjustor (20.1, 20.2; 22.1, 22.2).

3. The conveying device (10) according to claims 1 or 2, **characterized in that**, with regard to the conveyance direction of the rod-shaped articles (12) in the conveyance channel (14) in a conveyance channel section, the distance of the opposite-facing head-end guide walls (18.1, 18.2) is adjustable or is adjusted over the length of the conveyance channel section by operation of the head-end guide-wall distance adjustor (20.1, 20.2; 22.1, 22.2).

4. The conveying device (10) according to one of the claims 1 to 3, **characterized in that** the conveyance channel (14) comprises an entry opening and an exit opening in the conveyance direction of the rod-shaped articles (12), in which the opposite-facing end sections of the head-end guide walls (18.1, 18.2) are arranged parallel to each other at the entry opening and at the exit opening of the conveyance channel (14), and in which between the entry opening and the exit opening, the conveyance channel (14) is designed in the form of a spiral, so that the articles (12) at the exit opening are turned in their position at a pre-determined spiral angle in relation to the orientation of the rod-shaped articles at the entry opening of the conveyance channel (14) during the conveyance of the rod-shaped articles (12) in the conveyance channel (14).

5. The conveying device (10) according to one of the claims 1 to 4, **characterized in that** a linearly movable actuator is arranged at the entry opening of the conveyance channel (14) at each opposite-facing head-end guide wall (18.1, 18.2), in which the actuators are each arranged at a pre-determined angle of less than 90° (< 90°) at the head-end guide walls (18.1, 18.2), in which preferably the linear directions of movement of the actuators are designed parallel, preferably collinearly, to each other.

6. The conveying device (10) according to one of the claims 1 to 5, **characterized in that** a linearly movable actuator is arranged at the exit opening of the conveyance channel (14) at each opposite-facing head-end guide wall (18.1, 18.2), in which the actuators are each arranged at a pre-determined angle of less than 90° (< 90°) at the head-end guide walls (18.1, 18.2), in which preferably the linear movement directions of the actuators are designed parallel, preferably collinearly, to each other.

7. The conveying device (10) according to one of the claims 1 to 6, **characterized in that** a linearly moveable actuator arranged at a head-end guide wall (18.1, 18.2) at the entry opening and a linearly moveable actuator arranged at the same head-end guide wall (18.1, 18.2) at the exit opening are arranged for the movement of the head-end guide wall (18.1, 18.2), in which the movement directions of the actuators that are separate from each other in the conveyance direction are designed parallel at the same head-end guide wall (18.1, 18.2), and preferably in a plane orthogonal to the entry opening or to the exit opening of the conveyance channel (14).

8. The conveying device (10) according to one of the claims 1 to 7, **characterized in that** the head-end guide wall distance adjustor (20.1, 20.2; 22.1, 22.2) comprises at least one or several, preferably motor-driven drive units as actuators for the head-end guide walls (18.1, 18.2), in which the drive units are coupled with each other, and are in particular able to be synchronized, when using several drive units for the head-end guide walls (18.1, 18.2).

9. The conveying device (10) according to one of the claims 1 to 8, **characterized in that** the conveying device (10) is designed as a module (10.1, 10.2, 10.3), in which a spiral-shaped conveyance channel (14) for the rod-shaped articles is formed when using several, in particular structurally equivalent, conveying devices (10) each designed as a module (10.1, 10.2, 10.3), in which the total spiral angle of the conveyance channel (14) corresponds to the spiral angle of the conveying devices (10) multiplied by the number of used, and in particular structurally equivalent, modules (10.1, 10.2, 10.3).

10. The conveying device (10) according to one of the claims 1 to 9, **characterized in that** the conveying device (10) is designed as a module (10.1, 10.2, 10.3) with a spiral angle of 15°, or with a spiral angle that is a multiple, in particular a whole number (> 1) multiple, of 15°.

11. The conveying device (10) according to one of the claims 1 to 10, **characterized in that** the head-end guide walls (18.1, 18.2) and/or the side walls (16.1, 16.2) of the conveying device (10) are manufactured at least in part out of plastic that is preferably electrostatically dissipative and/or anti-static, and/or out of carbon-fibre reinforced composite, and/or **characterized in that** the head-end guide walls (18.1, 18.2) and/or the side walls (16.1, 16.2) are provided with a conductive surface coating.

12. The conveying device (10) according to one of the claims 1 to 11, **characterized in that** at least one head-end guide wall is designed as a swivelling head-end guide wall of the conveying device (10).

13. The conveyor system of the tobacco-processing industry with a conveyance means for the conveyance of a mass flow of articles made up of rod-shaped articles (12) of the tobacco-processing industry, in particular cigarettes or filter rods, in which the rod-shaped articles are conveyable by means of the conveyance means, and with a conveying device (10) for the conveyance, in particular for the vertical conveyance, of rod-shaped articles in accordance with one of the claims 1 to 12.

14. The conveyor system according to claim 13, **characterized in that** a preferably electronic control device is provided for the control of the, in particular electromotive, drive units, and/or of the actuators for the changing of the distance between the head-end guide walls.

## Revendications

1. Dispositif de transport (10) pour le transport, notamment vertical, d'articles en forme de tiges (12) de l'industrie du tabac, en particulier de cigarettes ou bâtons de filtre, le dispositif de transport (10) comportant un canal de transport (14), le canal de transport (14) étant constitué de deux parois latérales (16.1, 16.2) disposées en vis-à-vis et espacées l'une de l'autre et de deux parois de guidage d'extrémités de tête (18.1, 18.2) disposées en vis-à-vis et espacées l'une de l'autre, les parois latérales (16.1, 16.2) étant disposées entre les parois de guidage d'extrémités de tête (18.1, 18.2) disposées par paires, les extrémités de tête des articles en forme de tiges (12) étant respectivement associées à une paroi de guidage d'extrémités de tête (18.1, 18.2) lors du transport d'articles en forme de tiges (12) dans le canal de transport (14), et le canal de transport (14) étant réalisé en hélice dans la direction de transport des articles en forme de tiges (12), **caractérisé en ce que** la distance entre les parois de guidage d'extrémité de tête (18.1, 18.2) disposées en vis-à-vis est réglable dans la portion de transport du canal de transport (14) à l'aide d'un dispositif de réglage de distance entre parois de guidage d'extrémités de tête (20.1,20.2 ; 22.1, 22.2).

2. Dispositif de transport (10) selon la revendication 1, **caractérisé en ce que**, lors de l'actionnement du dispositif de réglage de distance entre parois de guidage d'extrémités de tête (20.1, 20.2 ; 22.1, 22.2), les parois de guidage d'extrémités de tête (18.1, 18.2) disposées en vis-à-vis sont déplaçables ou sont déplacées, de préférence simultanément.

3. Dispositif de transport (10) selon la revendication 1 ou 2, **caractérisé en ce que**, rapportée à la direction de transport des articles en forme de tiges (12) dans le canal de transport (14), dans une portion de transport du canal de transport, la distance entre les parois de guidage d'extrémités de tête (18.1, 18.2) disposées en vis-à-vis est réglable ou est réglée sur la longueur de la portion de canal de transport lors de l'actionnement du dispositif de réglage de distance entre parois de guidage d'extrémités de tête (20.1, 20.2 ; 22.1, 22.2).

4. Dispositif de transport (10) selon l'une des revendications 1 à 3, **caractérisé en ce que** le canal de transport (14) présente une ouverture d'entrée et une ouverture de sortie dans la direction de transport des articles en forme de tiges (12), les parties d'extrémité, disposées en vis-à-vis, des parois de guidage d'extrémités de tête (18.1, 18.2) étant disposées de manière parallèle entre elles au niveau de l'orifice d'entrée et de l'orifice de sortie du canal de transport (14), et le canal de transport (14) étant agencé en hélice entre l'orifice d'entrée et l'orifice de sortie, de façon que, lors du transport des articles en forme de tiges (12) dans le canal de transport (14), les articles (12) soient tournés à l'ouverture de sortie, en ce qui concerne leur position, d'un angle d'hélice prédéterminé par rapport à l'orientation des articles en forme de tiges au niveau de l'ouverture d'entrée du canal de transport (14).

5. Dispositif de transport (10) selon l'une des revendications 1 à 4, **caractérisé en ce qu'**au niveau de l'ouverture d'entrée du canal de transport (14), est disposé sur chacune des parois de guidage d'extrémités de tête disposées en vis-à-vis (18.1, 18.2) un actionneur déplaçable linéairement, les actionneurs étant disposés respectivement sur les parois de guidage d'extrémités de tête disposées en vis-à-vis (18.1, 18.2) en formant un angle prédéterminé inférieur à 90° (< 90°), les directions de mouvement linéaire des actionneurs étant, de préférence, mutuellement parallèles, de préférence colinéaires.

6. Dispositif de transport (10) selon l'une des revendications 1 à 5, **caractérisé en ce qu'**au niveau de l'ouverture de sortie du canal de transport (14), est disposé sur chacune des parois de guidage d'extrémités de tête disposées en vis-à-vis (18.1, 18.2) un actionneur déplaçable linéairement, les actionneurs étant disposés respectivement sur les parois de guidage d'extrémités de tête disposées en vis-à-vis (18.1, 18.2) en formant un angle prédéterminé inférieur à 90° (< 90°), les directions de mouvement linéaire des actionneurs étant, de préférence, mutuellement parallèles, de préférence colinéaires.

7. Dispositif de transport (10) selon l'une des revendications 1 à 6, **caractérisé en ce que** sont disposés un actionneur déplaçable linéairement situé sur une paroi de guidage d'extrémités de tête (18.1, 18.2) au niveau de l'ouverture d'entrée et un actionneur déplaçable linéairement situé sur la même paroi de guidage d'extrémités de tête (18.1, 18.2) au niveau de l'ouverture de sortie pour le mouvement de la paroi de guidage d'extrémités de tête (18 .1, 18.2), les directions de mouvement des actionneurs espacés l'un de l'autre dans la direction de transport sur la même paroi de guidage d'extrémités de tête (18.1, 18.2) étant parallèles et, de préférence, prévues dans un plan perpendiculaire à l'ouverture d'entrée ou à l'ouverture de sortie du canal de transport (14).

8. Dispositif de transport (10) selon l'une des revendications 1 à 7, **caractérisé en ce que** le dispositif de réglage de distance entre parois de guidage d'extrémités de tête (20.1, 20.2 ; 22.1, 22.2) présente au moins un ou plusieurs entraînements, de préférence motorisés, en tant qu'actionneurs pour les parois de guidage d'extrémités de tête (18.1, 18.2), les entraînements étant couplés entre eux, en particulier pouvant être synchronisés, notamment en cas d'utilisation de plusieurs entraînements pour les parois de guidage d'extrémités de tête (18.1, 18.2).

9. Dispositif de transport (10) selon l'une des revendications 1 à 8, **caractérisé en ce que** le dispositif de transport (10) est conçu en tant que module (10.1, 10.2, 10.3), un canal de transport (14) en hélice étant réalisé pour le transport des articles en forme de tiges notamment en utilisant plusieurs dispositifs de transport (10) conçus chacun en tant que module (10.1, 10.2, 10.3), en particulier de conception identique, l'angle d'hélice total du canal de transport (14) correspondant à l'angle d'hélice des dispositifs de transport (10) multiplié par le nombre de modules (10.1, 10.2, 10.3) utilisés, en particulier identiques.

10. Dispositif de transport (10) selon l'une des revendications 1 à 9, **caractérisé en ce que** le dispositif de transport (10) est conçu en tant que module (10.1, 10.2, 10.3) avec un angle d'hélice de 15° ou un multiple, en particulier entier (> 1), de 15°.

11. Dispositif de transport (10) selon l'une des revendications 1 à 10, **caractérisé en ce que** les parois de guidage d'extrémités de tête (18.1, 18.2) et/ou les parois latérales (16.1, 16.2) du dispositif de transport (10) sont réalisées au moins en partie en matière plastique, de préférence à dissipation électrostatique et/ou antistatique, et/ou en matériau composite renforcé de fibres de carbone et/ou **en ce que** les parois de guidage d'extrémités de tête (18.1, 18.2) et/ou les parois latérales (16.1, 16.2) sont pourvues d'un revêtement de surface conducteur.

12. Dispositif de transport (10) selon l'une des revendications 1 à 11, **caractérisé en ce qu'**au moins une paroi de guidage d'extrémités de tête est conçue en tant que paroi de guidage pivotante du dispositif de transport (10).

13. Installation de transport de l'industrie du tabac, comprenant un moyen de transport pour le transport d'un flux massique d'articles en forme de tiges (12) de l'industrie du tabac, en particulier des cigarettes ou bâtons de filtres, les articles en forme de tiges pouvant être transportés à l'aide du moyen de transport, et un dispositif de transport (10) destiné au transport, en particulier vertical, des articles en forme de tiges selon l'une des revendications 1 à 12.

14. Installation de transport selon la revendication 13, **caractérisée en ce qu'**est prévu un dispositif de commande, de préférence électronique, pour la commande des entraînements, notamment par moteur électrique, et/ou des actionneurs pour modifier la distance entre les parois de guidage d'extrémités de tête.
